# FASCICULE DE BREVET EUROPEEN

(11) **EP 2 942 314 B1**
(45) Date de publication et mention de la délivrance du brevet: **11.01.2017**
(21) Numéro de dépôt: 15163238.7
(22) Date de dépôt: 10.04.2015
(51) Int. Cl.: B65G 69/28

(54) **NIVELEUR DE QUAI TELESCOPIQUE PERMETTANT DE SUIVRE LES DEPLACEMENTS D'UN VEHICULE LORS DE SON CHARGEMENT ET/OU DECHARGEMENT**
TELESKOP-ÜBERFAHRBRÜCKE, MIT DER DIE BEWEGUNG EINES FAHRZEUGS BEIM BE- UND/ODER ENTLADEN NACHVERFOLGT WERDEN KANN
TELESCOPIC DOCK LEVELLER MAKING IT POSSIBLE TO TRACK THE MOVEMENTS OF A VEHICLE DURING THE LOADING AND/OR UNLOADING THEREOF

(30) Priorité: 07.05.2014 FR 1454123
(43) Date de publication de la demande: 11.11.2015
(73) Titulaire: GPsystems, 82790 Saint-Sornin-Leulac (FR)
(72) Inventeur: PENOT, Etienne, 87290 Saint-Sornin-Leulac (FR); VERGE, Jean-Paul, 69006 Lyon (FR)
(74) Mandataire: Cabinet Chaillot

(56) Documents cités:
- US-A- 4 727 613
- US-A- 5 457 838

## Description

La présente invention concerne un niveleur de quai télescopique selon le préambule de la revendication 1.

Les niveleurs de quai sont largement utilisés pour assurer une transition ou liaison entre un quai de chargement et l'intérieur d'un véhicule. Ces niveleurs de quai sont généralement, soit à lèvre télescopique, soit à lèvre rabattable.

Les niveleurs de quai les plus couramment utilisés pour établir la liaison entre un quai de chargement et/ou déchargement et le plancher d'un véhicule, comprennent une plate-forme articulée par rapport au bord du quai et dont l'inclinaison est assurée et contrôlée par un vérin hydraulique. Quant à la mise à niveau de l'extrémité de la plate-forme et le soutien de celle-ci par rapport au plancher du véhicule, ils sont assurés par une lèvre articulée télescopique ou fixe par rapport à ladite extrémité et dont le débattement est contrôlé par un vérin.

Un exemple d'un niveleur de quai selon le préambule de la revendication 1 est décrit dans le brevet américain US 5,457,838. La rampe de ce niveleur de quai peut être étendue et abaissée par un vérin hydraulique, utilisé uniquement pour amener la rampe dans la position déployée ou dans la position escamotée. Des plaques s'étendent vers le bas à partir de la face inférieure de la rampe, à proximité de la lèvre, de façon à former une barrière contre laquelle l'extrémité du véhicule peut éventuellement venir en contact. Ce contact signale à l'opérateur d'arrêter l'extension de la rampe, afin de ne pas venir en appui contre le véhicule. En effet, dans ce brevet américain, on cherche à éviter tout appui de la rampe contre le véhicule. Il est ainsi proposé de rendre les plaques pivotantes autour d'un axe horizontal et de les coupler à un interrupteur de fin de course, par l'intermédiaire de charnières, de façon à éviter que la rampe ne soit davantage étendue.

Lors de l'étape de chargement et/ou déchargement, il arrive que le véhicule se déplace de manière involontaire.

Tout éloignement du véhicule par rapport au quai, alors que la lèvre reste fixe, entraîne un dégagement intempestif correspondant de la lèvre articulée, qui se trouve ainsi brusquement sans appui. Cela provoque un déséquilibre de la plate-forme, se traduisant par la chute de celle-ci. Il peut résulter de cette situation des accidents très graves.

Tout rapprochement du véhicule par rapport au quai, alors que la lèvre reste fixe, risque d'endommager le véhicule ou le niveleur.

De plus, si un véhicule de manutention se présente sur la lèvre alors que la lèvre du niveleur n'est plus en appui sur le véhicule, le véhicule de manutention et le personnel de quai risquent de se retrouver coincés entre le quai et le véhicule.

La présente invention vise à résoudre les inconvénients de l'état antérieur de la technique, en proposant un niveleur de quai dont la lèvre est sollicitée en permanence en direction du véhicule afin de suivre le véhicule en cas de déplacement de celui-ci sans laisser d'espace entre le niveleur et la remorque du véhicule, tout en conservant une région d'extrémité de la lèvre d'une longueur suffisante, notamment de 15 cm, à l'intérieur du véhicule, selon la réglementation en vigueur.

La présente invention permet de garantir le positionnement correct de la lèvre indépendamment d'un éventuel déplacement involontaire du véhicule, et donc d'éviter les accidents dus à l'effondrement de la lèvre et d'empêcher l'endommagement du plancher de la remorque, sans faire appel à des moyens de détection extérieurs plus coûteux et moins fiables.

La présente invention a donc pour objet un niveleur de quai télescopique apte à établir une liaison entre un quai destiné à accueillir des véhicules pour leur chargement et/ou déchargement et l'intérieur d'un véhicule positionné perpendiculairement au bord du quai, lequel niveleur de quai comprend un corps fixé ou destiné à être fixé au quai et une lèvre mobile entre une position de repos, dans laquelle la lèvre a été déplacée dans une direction dite de rétractation, dirigée vers le corps, et est positionnée sensiblement à l'intérieur du corps, et une position de chargement et/ou déchargement, dans laquelle la lèvre a été déplacée dans une direction dite d'extension, dirigée à l'opposé du corps, et est positionnée sensiblement à l'extérieur du corps avec sa région d'extrémité libre en contact avec le véhicule pour permettre d'établir une liaison entre le véhicule et le quai, caractérisé par le fait que la lèvre comporte des moyens d'appui agencés pour venir en appui contre une surface sensiblement verticale du véhicule, et par le fait que le niveleur comprend en outre des moyens de sollicitation permanente de la lèvre dans la direction d'extension, pour que la lèvre exerce une poussée contre le véhicule par l'intermédiaire desdits moyens d'appui, lesdits moyens de sollicitation permanente autorisant un déplacement de la lèvre dans la direction de rétractation, de telle sorte que, au cours d'une opération de chargement et/ou déchargement, la lèvre se déplace dans la direction de rétractation si le véhicule se rapproche du quai et la lèvre se déplace dans la direction d'extension si le véhicule s'éloigne du quai, de la même quantité de déplacement que le véhicule, la lèvre restant ainsi en position de chargement et/ou déchargement même en cas de déplacement involontaire du véhicule.

De préférence, la lèvre est mobile en translation par rapport au corps, y compris pendant une opération de chargement et/ou déchargement.

Les moyens d'appui peuvent comprendre, à la région d'extrémité libre de la lèvre, au moins une surface d'appui sensiblement verticale.

La région d'extrémité libre de la lèvre peut présenter une surface horizontale plate, dite de repos, orientée vers le bas, destinée à reposer sur une surface horizontale plate du véhicule, les moyens d'appui étant formés au-dessous de la surface de repos et en retrait par rapport au bord libre de celle-ci pour venir en appui contre un bord vertical du véhicule.

La lèvre peut se présenter sous la forme d'une plaque allongée rigide dont le chant transversal de ladite région d'extrémité libre de la lèvre présente en partie inférieure un décrochement formant une surface horizontale plate tournée vers le bas, qui constitue ladite surface de repos, et une surface verticale plate tournée à l'opposé du corps et qui constitue les moyens d'appui.

Les moyens de sollicitation permanente peuvent être des moyens de sollicitation élastique tels que des ressorts.

De préférence, les moyens de sollicitation permanente comprennent au moins un vérin.

Le ou les vérins peuvent être des vérins double effet et peuvent être prévus, pour le ou chaque vérin, ou pour l'ensemble des vérins, une pompe entraînée par un moteur et un distributeur interposé entre la pompe et le vérin, le côté admission de la pompe étant relié à un réservoir de fluide, ce dernier étant également relié au vérin par l'intermédiaire du distributeur, un limiteur de pression étant avantageusement prévu entre le distributeur et le vérin.

Le limiteur de pression peut être agencé pour réguler la pression hydraulique dans une plage permettant l'application sur le véhicule, par la lèvre, d'une force comprise entre 100 N et 5000 N.

De préférence, le niveleur de quai comprend en outre des moyens de détection de la position extrême de sortie de la lèvre, dans laquelle la lèvre ne peut pas être déplacée davantage dans la direction d'extension, lesquels moyens de détection sont reliés à ou destinés à être reliés à une alarme permettant d'indiquer que la lèvre est dans la position extrême de sortie et que la liaison entre le quai et le véhicule n'est plus garantie.

Les moyens de détection peuvent comprendre un capteur de fin de course du vérin.

Pour mieux illustrer l'objet de la présente invention, on va en décrire ci-après, à titre illustratif et non limitatif, un mode de réalisation préféré, avec référence aux dessins annexés.

Sur ces dessins :
- la Figure 1 est un schéma représentant, en vue de dessus, le niveleur de quai selon la présente invention, dans la position de chargement/déchargement ; et
- la Figure 2 est un schéma représentant, en coupe longitudinale verticale, le niveleur de quai selon la présente invention, dans la position de chargement/déchargement, ainsi que le schéma de principe des moyens de sollicitation permanente.

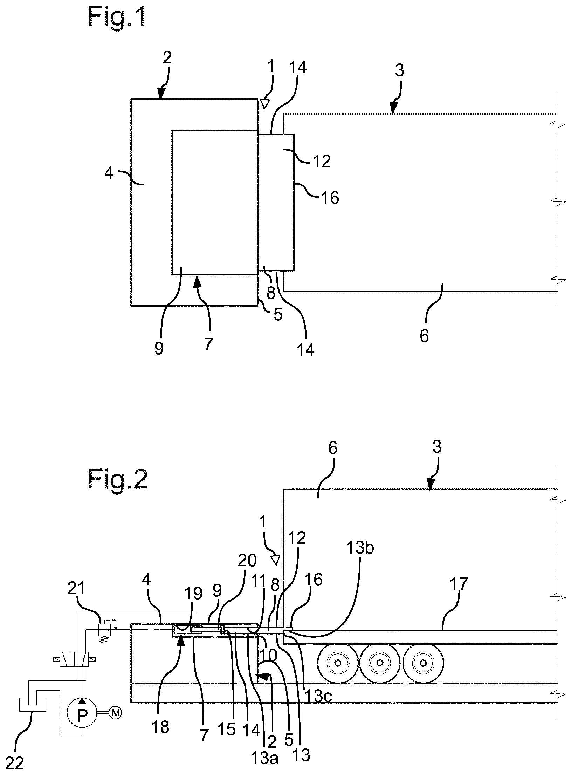

Le niveleur de quai 1 représenté sur les Figures 1 et 2 est destiné à assurer une transition entre un quai 2 et l'intérieur d'un véhicule 3 lors d'une opération de chargement et/ou déchargement.

Le quai 2 comporte une plateforme horizontale plate 4 située à une certaine hauteur par rapport au sol de l'aire de chargement et/ou déchargement. Le quai 2 est également bordé à l'avant par un nez de quai 5 s'étendant verticalement entre le sol et la plateforme 4.

Le véhicule 3 est accueilli dans l'aire de chargement située à l'avant du quai. Le véhicule est stationné perpendiculairement au nez de quai 5 et à une certaine distance de celui-ci, de telle sorte que le véhicule 3 est en contact avec un butoir de quai (non représenté) fixé en nez de quai 5. Comme on peut le voir sur la Figure 2, le véhicule 3 représenté ici est un camion ayant une remorque 6 avec une ouverture d'accès à l'arrière. La paroi du véhicule 3 avec l'ouverture d'accès à l'intérieur du véhicule 3 est positionnée en face du nez de quai 5 avec un espacement entre ceux-ci.

Le niveleur de quai 1 comprend un corps 7 incorporé au quai 2 et une lèvre 8 apte à être déployée pour s'étendre entre le corps 7 et l'intérieur du véhicule 3 de façon à ne pas laisser d'espace entre le quai 2 et le véhicule 3.

Dans le mode de réalisation représenté sur la Figure 2, le corps 7 se présente sous la forme d'un pavé droit creux ayant une face supérieure 9, une face inférieure, deux faces latérales, une face arrière et une face avant 10. Ce corps creux 7 comprend une ouverture 11 réalisée sur sensiblement l'ensemble de la face avant 10. Le corps 7 peut être intégré au quai 2 pour que la face supérieure 9 soit à fleur avec la plateforme 4, et forme une partie de celle-ci, et que la face avant 10 soit dans le prolongement du nez de quai 5.

La largeur du corps 7, qui correspond à la longueur de la face avant 10 pourra être inférieure à la largeur d'un camion de chargement standard.

La lèvre 8 se présente également sous la forme d'un pavé droit ayant une face supérieure 12, une face inférieure 13, deux faces latérales 14, une face arrière 15 et une face avant 16. L'épaisseur de la lèvre 8 ainsi que sa largeur sont inférieures à celles du corps 7, de telle sorte que la lèvre 8 est apte à être reçue de manière coulissante dans le corps 7, à travers l'ouverture 11 dans la face avant 10. Ainsi, la lèvre 8 est un élément massif monté de manière télescopique dans le corps 7.

Jusqu'ici, le niveleur 1 selon la présente invention ne diffère pas, sur le principe, d'un niveleur de quai télescopique connu.

On va maintenant décrire ci-dessous les caractéristiques particulières spécifiques au mode de réalisation particulier de la présente invention représenté schématiquement sur les Figures 1 et 2.

La face supérieure 12 de la lèvre 8 définit une surface horizontale plate. La face inférieure 13 de la lèvre 8 est définie par une première surface horizontale plate 13a et une seconde surface horizontale plate 13b, décalée en hauteur par rapport à la face supérieure 12 en formant une surface verticale 13c. La seconde surface horizontale 13b, dite de repos, est située à une hauteur supérieure à celle de la première surface horizontale 13a et est destinée, dans la position de chargement et/ou déchargement, à venir en contact avec une surface horizontale plate du véhicule, notamment la région d'extrémité arrière du plancher 17 de la remorque 6, tandis que la surface verticale 13c, dite d'appui, est destinée à venir en appui contre la face arrière de la remorque 6, comme on peut le voir sur la Figure 2.

La lèvre 8 est montée mobile en translation dans le corps 7 et le mouvement de translation de la lèvre 8 est commandé par des moyens de sollicitation permanente de la lèvre 8 dans la direction à l'opposé du corps 7, lesquels moyens comprennent au moins un vérin hydraulique 18 monté dans le corps 7.

Le vérin 18 est un vérin hydraulique double effet et comprend ainsi un corps de vérin 19, fixé en position dans le corps 7 du niveleur 1 avec sa tête et son fond côté respectivement face avant 10 et face arrière du corps 7, un piston (non représenté) et une tige de piston 20 dont l'extrémité est fixée à la face arrière 15 de la lèvre 8.

Le vérin 18 est lui-même commandé par une pompe hydraulique à un sens de flux P entraînée par un moteur électrique M, le côté refoulement de la pompe P étant relié au vérin 18 avec interposition d'un distributeur 5/2 à pilotage électrique 23 et d'un limiteur de pression 21, servant à réguler la pression hydraulique fournie au vérin 18, et donc la force que le vérin 18 applique à la lèvre 8, et le côté admission de la pompe P étant relié de manière fluidique à un réservoir de fluide 22, par exemple de l'huile, auquel est également relié de manière fluidique le vérin 18 par l'intermédiaire du distributeur 23.

On va maintenant décrire ci-après le fonctionnement du niveleur de quai 1 selon la présente invention.

Lorsque le véhicule 3 arrive au quai 2, il est tout d'abord placé en marche arrière perpendiculairement au quai 2 et à une certaine distance de celui-ci, la lèvre 8 étant à cet instant dans sa position de repos, à savoir positionnée sensiblement complètement à l'intérieur du corps 7, c'est-à-dire que la face avant 16 de la lèvre 8 n'est pas en saillie au-delà de l'ouverture 11 du corps 7. Le moteur M est mis en marche, la pompe P est alors entraînée et le vérin 18 est actionné pour faire sortir la tige de piston 20, déplaçant ainsi la lèvre 8 en direction du véhicule 7, laquelle direction est appelée direction d'extension. La lèvre 8 est sollicitée par la tige de piston 20 dans la direction d'extension jusqu'à ce qu'elle vienne en contact avec le véhicule 3, la surface d'appui 13c venant au contact du bord vertical inférieur de la face arrière de la remorque 6, tandis que la surface de repos 13b repose sur le plancher 17. Dans cette position, dite de chargement et/ou déchargement, le quai 2 et le véhicule 3 sont reliés de manière continue par la lèvre 8. Le personnel de quai peut alors effectuer les opérations de chargement et/ou déchargement par déplacement sur la plateforme 4 du quai 2, la face supérieure 9 du corps 7, la partie de la face supérieure 12 de la lèvre 8 qui fait saillie hors du corps 7 et le plancher 17 de la remorque 6.

Le moteur M, et donc également la pompe P, reste en fonctionnement tout au long de l'opération de chargement et/ou déchargement.

Lors de l'opération de chargement et/ou déchargement, le véhicule 3 peut se déplacer involontairement soit en direction du quai 2, soit à l'opposé de celui-ci.

Dans le cas où le véhicule 3 se rapproche du quai 2, la remorque 6 exerce une poussée contre la surface d'appui 13c de la lèvre 8. Cette poussée du véhicule 3 s'oppose à la poussée continue exercée par la surface d'appui 13c contre le véhicule 3 sous l'action du vérin 18. Si la poussée du véhicule 3 est supérieure à une valeur de seuil, définie par la pression maximale autorisée par le limiteur de pression 21 qui définit lui-même la pression exercée sur la tige de piston 20 par le fluide sous pression, alors la lèvre 8 sera déplacée en direction du corps 7, dans la direction dite de rétractation, tout en restant en contact avec le remorque 6 par la surface de repos 13b et la surface d'appui 13c.

Dans le cas où le véhicule 3 s'éloigne du quai 2, le vérin 18, qui est alimenté en permanence en fluide sous pression par la pompe P, amène la lèvre 8 à se déplacer dans la direction d'extension de la même quantité de déplacement que le véhicule 3, de telle sorte que la surface d'appui 13c reste plaquée contre la remorque 6.

Dans le cas où le véhicule 3 s'éloigne du quai 2 d'une distance supérieure à la longueur de la lèvre 8 pouvant faire saillie au-delà de la face avant 10 du corps 7, une alarme est déclenchée de façon à indiquer au personnel de quai que la liaison continue entre le quai 2 et le véhicule 3 est interrompue et que l'opération de chargement/déchargement ne peut plus être conduite en sécurité. Cette interruption de la liaison entre le quai 2 et le véhicule 3 peut être détectée par un capteur de fin de course qui détecte la course de sortie maximale de la tige de piston 20, laquelle correspond à la position extrême de sortie de la lèvre 8.

En résumé, lorsque le véhicule 3 recule, la lèvre 8 est déplacée dans la direction de rétractation tout en restant en appui contre le véhicule 3, de telle sorte que le plancher 17 du véhicule 3 ne sera pas endommagé par la lèvre 8 et que la liaison continue entre le quai 2 et le véhicule 3 est assurée. Lorsque le véhicule 3 avance, la lèvre 8 est automatiquement déplacée dans la direction d'extension tout en restant en appui contre le véhicule 3, de telle sorte qu'aucun espace n'est créé entre la surface d'appui 13c de la lèvre 8 et le véhicule 3, permettant à la lèvre 8 de supporter en permanence le poids du matériel de manutention et du personnel de quai. Enfin, lorsque le véhicule 3 avance de manière trop importante, le personnel de quai est prévenu du fait que le déplacement du véhicule 3 ne peut plus être compensé par le niveleur de quai 1.

Le niveleur de quai 1 selon la présente invention garanti donc la sécurité lors d'une opération de chargement et/ou déchargement.

Il est bien entendu que le mode de réalisation particulier qui vient d'être décrit a été donné à titre indicatif et non limitatif et que des modifications peuvent être apportées sans que l'on s'écarte pour autant du cadre de la présente invention.

Par exemple, le niveleur de quai selon la présente invention pourra être simplement fixé sur une plateforme d'un quai existant, avec éventuellement disposition d'une rampe pour éviter la formation d'une marche entre la plateforme et la face supérieure du corps.

## Revendications

1. Niveleur de quai (1) télescopique apte à établir une liaison entre un quai (2) destiné à accueillir des véhicules (3) pour leur chargement et/ou déchargement et l'intérieur d'un véhicule (3) positionné perpendiculairement au bord du quai (2), lequel niveleur de quai (1) comprend un corps (7) fixé ou destiné à être fixé au quai (2) et une lèvre (8) mobile entre une position de repos, dans laquelle la lèvre (8) a été déplacée dans une direction dite de rétractation, dirigée vers le corps (7), et est positionnée sensiblement à l'intérieur du corps (7), et une position de chargement et/ou déchargement, dans laquelle la lèvre (8) a été déplacée dans une direction dite d'extension, dirigée à l'opposé du corps (7), et est positionnée sensiblement à l'extérieur du corps (7) avec sa région d'extrémité libre en contact avec le véhicule (3) pour permettre d'établir une liaison entre le véhicule (3) et le quai (2), **caractérisé par le fait que** la lèvre (8) comporte des moyens d'appui (13c) agencés pour venir en appui contre une surface sensiblement verticale du véhicule (3), et **par le fait que** le niveleur (1) comprend en outre des moyens de sollicitation permanente (18) de la lèvre (8) dans la direction d'extension, pour que la lèvre (8) exerce une poussée contre le véhicule (3) par l'intermédiaire desdits moyens d'appui (13c), lesdits moyens de sollicitation permanente (18) autorisant un déplacement de la lèvre (8) dans la direction de rétractation, de telle sorte que, au cours d'une opération de chargement et/ou déchargement, la lèvre (8) se déplace dans la direction de rétractation si le véhicule (3) se rapproche du quai et la lèvre (8) se déplace dans la direction d'extension si le véhicule (3) s'éloigne du quai (2), de la même quantité de déplacement que le véhicule (3), la lèvre (8) restant ainsi en position de chargement et/ou déchargement même en cas de déplacement involontaire du véhicule (3).

2. Niveleur de quai (1) selon la revendication 1, **caractérisé par le fait que** la lèvre (8) est mobile en translation par rapport au corps (7), y compris pendant une opération de chargement et/ou déchargement.

3. Niveleur de quai (1) selon l'une des revendications 1 et 2, **caractérisé par le fait que** les moyens d'appui (13c) comprennent, à la région d'extrémité libre de la lèvre (8), au moins une surface d'appui sensiblement verticale (13c).

4. Niveleur de quai selon l'une des revendications 1 à 3, **caractérisé par le fait que** la région d'extrémité libre de la lèvre (8) présente une surface horizontale plate (13b), dite de repos, orientée vers le bas, destinée à reposer sur une surface horizontale plate (17) du véhicule (3), les moyens d'appui (13c) étant formés au-dessous de la surface de repos (13b) et en retrait par rapport au bord libre de celle-ci pour venir en appui contre un bord vertical du véhicule (3).

5. Niveleur de quai (1) selon la revendication 4, **caractérisé par le fait que** la lèvre (8) se présente sous la forme d'une plaque allongée rigide dont le chant transversal de ladite région d'extrémité libre de la lèvre (8) présente en partie inférieure un décrochement formant une surface horizontale plate (13b) tournée vers le bas, qui constitue ladite surface de repos (13b), et une surface verticale plate (13c) tournée à l'opposé du corps (7) et qui constitue les moyens d'appui (13c).

6. Niveleur de quai (1) selon l'une des revendications 1 à 5, **caractérisé par le fait que** les moyens de sollicitation permanente (18) comprennent au moins un vérin (18).

7. Niveleur de quai (1) selon la revendication 6, **caractérisé par le fait que** le ou les vérins sont des vérins double effet et que sont prévus, pour le ou chaque vérin (18), ou pour l'ensemble des vérins (18), une pompe (P) entraînée par un moteur (M) et un distributeur (23) interposé entre la pompe (P) et le vérin (18), le côté admission de la pompe (P) étant relié à un réservoir de fluide (22), ce dernier étant également relié au vérin (18) par l'intermédiaire du distributeur (23), un limiteur de pression (21) étant avantageusement prévu entre le distributeur (23) et le vérin (18).

8. Niveleur de quai (1) selon la revendication 7, **caractérisé par le fait que** le limiteur de pression (21) est agencé pour réguler la pression hydraulique dans une plage permettant l'application sur le véhicule (3), par la lèvre (8), d'une force comprise entre 100 N et 5000 N.

9. Niveleur de quai (1) selon l'une des revendications 1 à 8, **caractérisé par le fait qu'**il comprend en outre des moyens de détection de la position extrême de sortie de la lèvre (8), dans laquelle la lèvre (8) ne peut pas être déplacée davantage dans la direction d'extension, lesquels moyens de détection sont reliés à ou destinés à être reliés à une alarme permettant d'indiquer que la lèvre (8) est dans la position extrême de sortie et que la liaison entre le quai (2) et le véhicule (3) n'est plus garantie.

10. Niveleur de quai (1) selon la revendication 9, prise en dépendance de l'une des revendications 6 à 8, **caractérisé par le fait que** les moyens de détection comprennent un capteur de fin de course du vérin (18).

## Patentansprüche

1. Teleskop-Überfahrbrücke (1) zum Herstellen einer Verbindung zwischen einer Rampe (2) zum Empfang von Fahrzeugen (3) für ihr Be- und/oder Entladen und dem Innern eines Fahrzeugs (3), das quer am Rand der Rampe (2) positioniert ist, wobei die Überfahrbrücke (1) einen Körper (7) umfasst, der an der Rampe (2) befestigt oder zu befestigen ist, und eine Lippe (8), die zwischen einer Ruheposition, in der die Lippe (8) in einer Richtung genannt Einzug verschoben worden ist, die zu dem Körper (7) hin gerichtet ist, und im wesentlichen im Innern des Körpers (7) positioniert ist, und einer Be- und/oder Entlade-Position beweglich ist, in der die Lippe (8) in einer Richtung genannt Ausweitung verschoben worden ist, weg von dem Körper (7), und im wesentlichen außerhalb des Körpers (7) positioniert ist, mit seinem freien Endbereich in Kontakt mit dem Fahrzeug (3), um eine Verbindung zwischen dem Fahrzeug (3) und der Rampe (2) zu gestatten, **gekennzeichnet dadurch, dass** die Lippe (8) Auflagemittel (13c) umfasst, die in Anlage gegen eine im wesentlichen senkrechte Oberfläche des Fahrzeugs (3) kommen, sowie dadurch, dass die Überfahrbrücke (1) außerdem Mittel zur Dauerbeanspruchung (18) der Lippe (8) in Ausweitungsrichtung umfasst, damit die Lippe (8) einen Schub gegen das Fahrzeug (3) mittels der genannten Auflagemittel (13c) ausübt, wobei die Mittel zur Dauerbeanspruchung (18) eine Bewegung der Lippe (8) in Einzugsrichtung gestatten, so dass während einer Be- und/oder Entlade-Operation die Lippe (8) sich in Einzugsrichtung bewegt, wenn das Fahrzeug (3) sich der Rampe annähert, und die Lippe (8) sich in Ausweitungsrichtung bewegt, wenn das Fahrzeug (3) sich von der Rampe (2) entfernt, genauso weit wie das Fahrzeug (3), so dass die Lippe (8) selbst bei unabsichtlicher Bewegung des Fahrzeugs (3) in der Be- und/oder Entlade-Position bleibt.

2. Überfahrbrücke (1) nach Anspruch 1, **gekennzeichnet dadurch, dass** die Lippe (8) translationsbeweglich im Verhältnis zum Körper (7) ist, auch während einer Be- und/oder Entlade-Operation.

3. Überfahrbrücke (1) nach einem beliebigen der Ansprüche 1 und 2, **gekennzeichnet dadurch, dass** die Auflagemittel (13c) an dem freien Endbereich der Lippe (8) mindestens eine im wesentlichen senkrechte Auflageoberfläche (13c) umfassen.

4. Überfahrbrücke nach einem beliebigen der Ansprüche 1 bis 3, **gekennzeichnet dadurch dass** der freie Endbereich der Lippe (8) eine flache waagrechte Oberfläche (13b) aufweist, Ruhefläche genannt, die nach unten ausgerichtet ist und auf einer flachen waagrechten Oberfläche (17) des Fahrzeugs (3) aufliegt, wobei die Auflagemittel (13c) unterhalb der Ruhefläche (13b) gebildet sind und zurückgesetzt im Verhältnis zum freien Rand letzterer, um in Anlage gegen einen senkrechten Rand des Fahrzeugs (3) zu kommen.

5. Überfahrbrücke (1) nach Anspruch 4, **gekennzeichnet dadurch, dass** die Lippe (8) die Form einer steifen verlängerten Platte aufweist, deren Querkante des freien Endbereichs der Lippe (8) im unteren Teil einen Versatz aufweist, der eine nach unten gedrehte flache waagrechte Oberfläche (13b) bildet, die die besagte Ruhefläche bildet (13b), und eine flache senkrechte Oberfläche (13c), die weg von dem Körper (7) gedreht ist und die Auflagemittel (13c) bildet.

6. Überfahrbrücke (1) nach einem beliebigen der Ansprüche 1 bis 5, **gekennzeichnet dadurch, dass** die Mittel zur Dauerbeanspruchung (18) mindestens einen Zylinder (18) umfassen.

7. Überfahrbrücke (1) nach dem Anspruch 6, **gekennzeichnet dadurch, dass** der oder die Zylinder doppeltwirkende Zylinder sind und dass für den oder jeden Zylinder (18), oder für die Einheit der Zylinder (18), eine Pumpe (P) vorgesehen ist, die von einem Motor (M) angetrieben wird, und ein Verteiler (23) zwischen der Pumpe (P) und dem Zylinder (18), wobei die Einlassseite der Pumpe (P) mit einem Fluidbehälter (22) verbunden ist, der ebenfalls mit dem Zylinder (18) verbunden ist, mittels des Verteilers (23), wobei vorteilhafterweise ein Druckbegrenzer (21) zwischen dem Verteiler (23) und dem Zylinder (18) vorgesehen ist.

8. Überfahrbrücke (1) nach Anspruch 7, **gekennzeichnet dadurch, dass** der Druckbegrenzer (21) den hydraulischen Druck auf einen Bereich regelt, in dem die Lippe (8) auf das Fahrzeug (3) einer Kraft zwischen 100 und 5000 N aufbringt.

9. Überfahrbrücke (1) nach einem beliebigen der Ansprüche 1 bis 8, **gekennzeichnet dadurch, dass** sie außerdem Mittel zur Ermittlung der extremen Auszugsposition der Lippe (8) umfasst, in der die Lippe (8) nicht mehr in die Ausweitungsrichtung verschoben werden kann, wobei die Ermittlungsmittel mit einem Alarm verbunden oder zu verbinden sind, wodurch es möglich wird, anzugeben, dass die Lippe (8) in der extremen Auszugsposition ist und dass die Verbindung zwischen der Rampe (2) und dem Fahrzeug (3) nicht mehr garantiert ist.

10. Überfahrbrücke (1) nach Anspruch 9, in Abhängigkeit von einem beliebigen der Ansprüche 6 bis 8, **gekennzeichnet dadurch, dass** die Ermittlungsmittel einen Endschalter für den Zylinder (18) umfassen.

## Claims

1. A telescopic dock leveller (1) able to establish a connection between a dock (2) for receiving vehicles (3) for loading and/or unloading thereof and the interior of a vehicle (3) positioned perpendicular to the edge of the dock (2), said dock leveller (1) comprising a body (7) attached or intended to be attached to the dock (2) and a lip (8) movable between a rest position, in which the lip (8) has been moved in a so-called retraction direction, oriented towards the body (7), and is positioned substantially within the body (7), and a loading and/or unloading position, in which the lip (8) has been moved in a so-called extension direction, oriented away from the body (7), and is positioned substantially outside the body (7) with its free end region in contact with the vehicle (3) so as to allow to establish a connection between the vehicle (3) and the dock (2), **characterized by** the fact that the lip (8) has bearing means (13c) arranged in order to bear against a substantially vertical surface of the vehicle (3), and by the fact that the leveller (1) further has means (18) for permanently biasing the lip (8) in the extension direction, so that the lip (8) exerts a thrust against the vehicle (3) via said bearing means (13c), said permanent biasing means (18) allowing a movement of the lip (8) in the retraction direction such that, during a loading and/or unloading operation, the lip (8) moves in the retraction direction if the vehicle (3) moves closer to the dock and the lip (8) moves in the extension direction if the vehicle (3) moves away from the dock (2), with the same amount of movement as the vehicle (3), the lip (8) thus maintaining the loading and/or unloading position even in case of unintentional movement of the vehicle (3).

2. The dock leveller (1) according to claim 1, **characterized by** the fact that the lip (8) is movable in translation with respect to the body (7), including during a loading and/or unloading operation.

3. The dock leveller (1) according to one of claims 1 and 2, **characterized by** the fact that the bearing means (13c) has, at the free end region of the lip (8), at least one substantially vertical bearing surface (13c).

4. The dock leveller according to one of claims 1 to 3, **characterized by** the fact that the free end region of the lip (8) has a flat horizontal surface (13b), so-called rest surface, oriented downwardly, intended to rest on a flat horizontal surface (17) of the vehicle (3), the bearing means (13c) being formed below the rest surface (13b) and being recessed with respect to the free edge thereof so as to abut against a vertical edge of the vehicle (3).

5. The dock leveller (1) according to claim 4, **characterized by** the fact that the lip (8) is in the form of a rigid elongated plate, the transversal rim of said free end region of the lip (8) having in its lower part a cavity forming a flat horizontal surface (13b) oriented downwardly, which constitutes said rest surface (13b), and a flat vertical surface (13c) oriented away from the body (7) and which constitutes the bearing means (13c).

6. The dock leveller (1) according to one of claims 1 to 5, **characterized by** the fact that the permanent biasing means (18) has at least one cylinder (18).

7. The dock leveller (1) according to claim 6, **characterized by** the fact that the one or more cylinders are double acting cylinders and by the fact that is provided, for the one or each cylinder (18), or for the set of cylinders (18), a pump (P) driven by a motor (M) and a directional control valve (23) interposed between the pump (P) and the cylinder (18), the intake side of the pump (P) being connected to a fluid tank (22), the latter being also connected to the cylinder (18) via the directional control valve (23), a pressure limiting device (21) being advantageously provided between the directional control valve (23) and the cylinder (18).

8. The dock leveller (1) according to claim 7, **characterized by** the fact that the pressure limiting device (21) is arranged to control the hydraulic pressure within a range allowing to apply on the vehicle (3), by the lip (8), a force between 100N and 5,000N.

9. The dock leveller (1) according to one of claims 1 to 8, **characterized by** the fact that it further comprises means for detecting the extreme exit position of the lip (8), in which the lip (8) cannot be moved further in the extension direction, said detection means being connected or intended to be connected to an alarm allowing to indicate that the lip (8) is in the extreme exit position and that the connection between the dock (2) and the vehicle (3) is no longer guaranteed.

10. The dock leveller (1) according to claim 9 taken in dependence of one of claims 6 to 8, **characterized by** the fact that the detection means comprise a cylinder (18) end-of-stroke sensor.
